# FASCICULE DE BREVET EUROPEEN

(11) **EP 0 798 028 B1**
(45) Date de publication et mention de la délivrance du brevet: **27.08.2003**
(21) Numéro de dépôt: 97400632.2
(22) Date de dépôt: 20.03.1997
(51) Int. Cl.: B01D 53/047, B01D 53/053

(54) **Procédé de traitement d'un mélange de gaz par adsorption à variation de pression**
Druckwechseladsorptionsverfahren zur Behandlung eines Gasgemisches
Pressure swing adsorption process for treating a gas mixture

(30) Priorité: 27.03.1996 FR 9603809
(43) Date de publication de la demande: 01.10.1997
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Andreani, Philippe, 94270 Le Kremlin Bicetre (FR); Monereau, Christian, 75011 Paris (FR); Petit, Pierre, 78530 Buc (FR)
(74) Mandataire: Le Moenner, Gabriel

(56) Documents cités:
- DE-A- 3 432 896
- DE-A- 3 433 058
- US-A- 3 788 036
- US-A- 5 370 728

## Description

La présente invention est relative à un procédé de traitement d'un mélange de gaz par adsorption à variation de pression dans une installation comprenant au moins un adsorbeur, du type dans lequel on effectue, dans le ou dans chaque adsorbeur, un cycle comprenant une phase de production et une phase de régénération, cette dernière comportant une phase initiale comportant une étape de décompression à co-courant, et une phase finale comportant une étape de recompression avec introduction à contre-courant de gaz issu de ladite étape de décompression à co-courant.

Un procédé de ce type est décrit dans le document EP-A-0 705 636, publié le 10 avril 1996 et qui ne donne aucune indication sur les durées des étapes respectives.

L'invention s'applique en particulier à la production d'oxygène par traitement d'air atmosphérique.

Les pressions dont il est question ici sont des pressions absolues.

La plupart des cycles d'adsorption à variation de pression destinés à séparer deux ou plusieurs gaz présentent, dans l'enchaînement de leurs étapes, une étape au moins de décompression ou dépressurisation à co-courant à laquelle correspond au moins une étape de recompression à contre-courant qui utilise du gaz issu de l'étape de décompression à co-courant.

L'objet de ces étapes est d'améliorer les performances globales du cycle en récupérant en partie la fraction du (ou des) gaz le(s) moins adsorbable(s) qui, en fin d'étape de production, se trouve(nt) dans la zone frontale et dans les volumes libres de l'adsorbeur, et en utilisant ce fluide pour recomprimer partiellement au moins un adsorbeur en fin de phase de régénération.

En l'absence de ce couple d'étapes, le gaz le moins adsorbable serait évacué au cours de l'étape de décompression ou purge à contre-courant qui suit l'étape de décompression à co-courant, en même temps que la fraction de(s) gaz la plus adsorbée. Ce gaz participerait alors à la régénération de l'adsorbeur en baissant la pression partielle des composés les plus facilement adsorbés, mais généralement de façon bien moins efficace que suivant le processus décrit auparavant.

Dans les cycles connus avant la priorité de la présente demande, qu'il s'agisse d'adsorbeurs que l'on relie directement entre eux (documents EP-A-354 259 ou EP-A-654 439) ou d'un ou plusieurs adsorbeurs(s) associé(s) à une capacité-tampon dans laquelle le gaz issu de la décompression à co-courant est temporairement stocké (document US-A-5 370 728), la durée des deux étapes couplées est identique ou pratiquement identique.

Or, de façon surprenante, la Demanderesse a constaté qu'un procédé du type précité, dans lequel, suivant l'invention, la durée de l'étape de recompression à contre-courant est inférieure à 0,8 fois, typiquement inférieure à 0,5 fois celle de l'étape de décompression à co-courant, permettait d'améliorer sensiblement les performances du cycle.

Un tel procédé peut comporter en outre une ou plusieurs des caractéristiques suivantes :
- le gaz issu de l'étape de décompression à co-courant est stocké temporairement dans une capacité-tampon;
- le procédé utilise un adsorbeur unique;
- le mélange à traiter est de l'air atmosphérique en vue de la production d'oxygène.

Des exemples de mise en oeuvre de l'invention vont maintenant être décrits en regard des dessins annexés, sur lesquels :
- la Figure 1 représente schématiquement un mode de réalisation d'une installation à adsorbeur unique pour la mise en oeuvre d'un procédé conforme à l'invention ; et
- la Figure 2 est un diagramme qui illustre un exemple de cycle selon l'invention mis en oeuvre dans l'installation de la Figure 1.

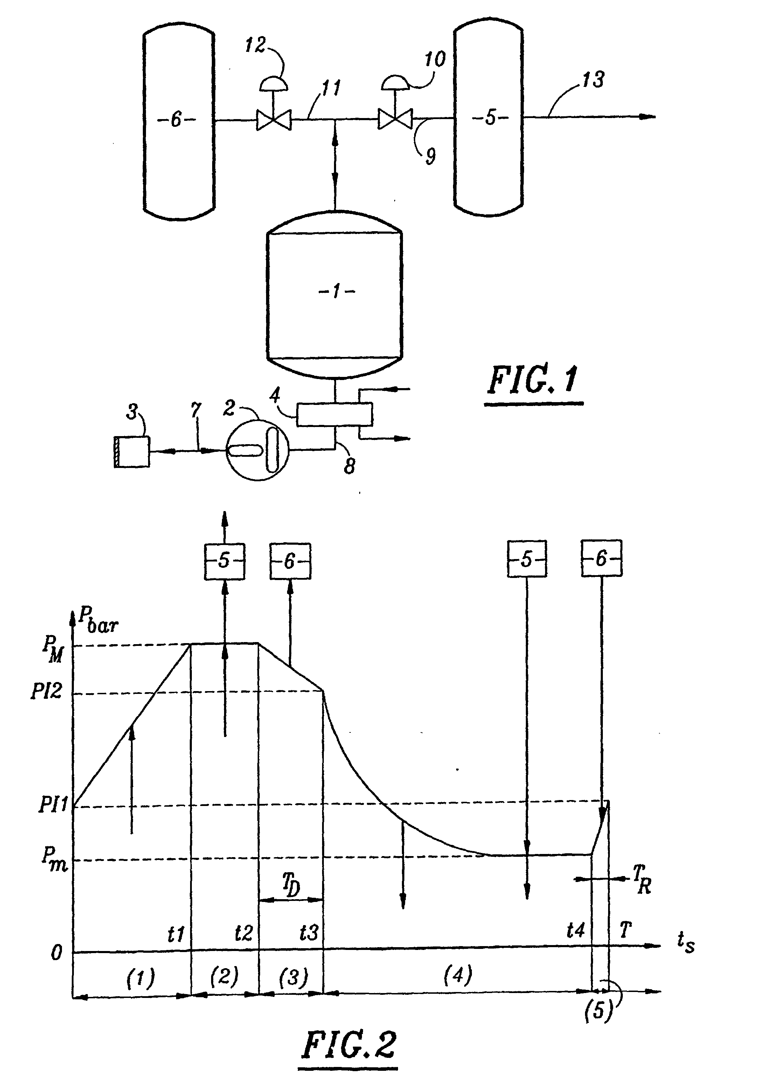

L'installation de la Figure 1 est avantageusement destinée à produire de l'oxygène, ayant une pureté de l'ordre de 90% à 93%, à partir d'air atmosphérique. Elle comprend essentiellement un adsorbeur unique 1 contenant un adsorbant, typiquement au moins une zéolite, une machine tournante réversible 2 formant compresseur et pompe à vide, un filtresilencieux 3, un réfrigérant 4, une capacité de production 5, et une capacité-tampon 6.

L'appareil 2 est relié d'une part, via une conduite 7, à l'atmosphère à travers le filtresilencieux 3, et d'autre part, via une conduite 8 qui traverse le réfrigérant 4, à l'entrée de l'adsorbeur 1, qui est l'extrémité inférieure de celui-ci. La sortie (extrémité supérieure) de l'adsorbeur est reliée d'une part à la capacité 5 via une conduite 9 équipée d'une vanne de régulation 10, d'autre part à la capacité-tampon 6 via une conduite 11 équipée d'une vanne de régulation 12. On a indiqué en 13 la conduite de production de l'installation, qui part de la capacité 5.

L'installation comporte par ailleurs des moyens, connus en soi et non représentés, de commande, de régulation et d'alimentation électrique et en fluide réfrigérant, adaptés pour effectuer le cycle illustré sur la Figure 2.

Sur la Figure 2, où les temps t sont portés en abscisses et les pressions absolues P en ordonnées, les traits orientés par des flèches indiquent les mouvements et destinations des courants gazeux et, en outre, le sens de circulation dans l'adsorbeur : lorsqu'une flèche est dans le sens des ordonnées croissantes (vers le haut du diagramme), le courant est dit à co-courant, dans l'adsorbeur. Si la flèche dirigée vers le haut est située au-dessous du trait indiquant la pression dans l'adsorbeur, le courant pénètre dans l'adsorbeur par l'extrémité d'entrée de l'adsorbeur; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter et du gaz soutiré en phase de production isobare; lorsqu'une flèche est dans le sens des ordonnées décroissantes (vers le bas du diagramme), le courant est dit à contre-courant, dans l'adsorbeur. Si la flèche dirigée vers le bas est située au-dessous du trait indiquant la pression de l'adsorbeur, le courant sort de l'adsorbeur par l'extrémité d'entrée de l'adsorbeur; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase de production isobare.

Le cycle de la Figure 2, dont la période T est, à titre d'exemple, 86,5 s, comprend les étapes successives suivantes :
(1) De t = 0 à t1 = 20 s, recompression finale à co-courant au moyen du gaz à traiter, d'une première pression intermédiaire PI1 jusqu'à la pression haute P_{M} du cycle, qui est par exemple d'environ 1,5x10⁵ Pa.
(2) De t1 à t2 = 30 s, production sensiblement isobare à la pression P_{M}. La production est envoyée à la capacité 5, d'où un débit d'oxygène plus faible est soutiré en permanence vers un poste utilisateur, via la conduite 13. Dans la pratique, en variante, la production, vers la capacité 5, commence avant l'instant t1, lors de la phase finale de pressurisation au voisinage de la pression haute du cycle P_{M}.
(3) De t2 à t3 = 40,5 s, soit pendant une durée T_{D} = 10,5 s, décompression à co-courant jusqu'à une seconde pression intermédiaire PI2. Le gaz issu de l'adsorbeur pendant cette étape est envoyé à la capacité-tampon 6. En variante, lors de cette étape (3) on peut également opérer une décompression simultanée à contre-courant.
(4) De t3 à t4 = 83 s, décompression à contre-courant par pompage jusqu'à la pression basse Pₘ du cycle, qui est par exemple d'environ 0,5 x 10⁵ Pa, puis purge/élution, typiquement sensiblement isobare à la pression Pₘ par poursuite du pompage et, simultanément, introduction de gaz de production à contre-courant en provenance de la capacité 5.
(5) De t4 à T, soit pendant une durée T_{R} = 3,5 s, première recompression à contre-courant jusqu'à la première pression intermédiaire PI1, au moyen de gaz provenant de la capacité-tampon 6.

Comme on le voit, selon un aspect de l'invention, la durée T_{D} de l'étape (3) de décompression à co-courant est nettement supérieure à la durée T_{R} de l'étape (5) de première recompression à contre-courant au moyen de gaz issu de l'étape (3).

De façon surprenante, il a été constaté que les performances d'un tel cycle sont sensiblement améliorées par rapport à celles d'un cycle analogue dans lequel chaque étape (3) et (5) aurait la même durée (10,5 + 3,5)/2 = 7 s. Ceci apparaît clairement dans le tableau ci-dessous, qui correspond à une installation telle que celle de la Figure 1, avec P_{M} = 1,5 x 10⁵ Pa et Pₘ = 0,45 x 10⁵ Pa.

| Cycle N° | 1 (art antérieur) | 2 (invention) | 3 (invention) | 4 (contre-exemple) |
|---|---|---|---|---|
| Durée du cycle T(s) | 86,5 | 86,5 | 83 | 83 |
| Durée recompression co-courant T_{D}(s) | 7 | 10,5 | 7 | 3,5 |
| Durée recompression contre-courant T_{R}(s) | 7 | 3,5 | 3,5 | 7 |
| Productivité (Nm³O₂/m³xh) | 35,08 | 37,1 | 37,3 | 35,6 |
| Rendement (%) | 57,3 | 59,5 | 57,2 | 54,9 |
| Productivité intrinsèque (Nm³O₂/m³ x cycle) | 0,86 | 0,89 | 0,86 | 0,82 |
| énergie spécifique (kWh/Nm³O₂) | 0,30 | 0,29 | 0,30 | 0,31 |

De façon habituelle, la productivité est la production horaire de l'installation pour 1 m³ d'adsorbant; la productivité intrinsèque est la production par cycle pour 1 m³ d'adsorbant; l'énergie spécifique est l'énergie nécessaire pour produire 1 Nm³ d'oxygène; et le rendement est le rapport de la quantité d'oxygène produite à la quantité d'oxygène contenue dans l'air traité.

Dans le tableau ci-dessus :
- Le cycle n° 1 est un cycle classique, dans lequel les durées T_{D} et T_{R} sont égales.
- Le cycle n° 2 correspond au cycle suivant l'invention de la Figure 2, avec T_{D} = 10,5 s et T_{R} = 3,5 s. On constate une amélioration de tous les paramètres. En particulier, la productivité est augmentée, tandis que l'énergie spécifique est réduite. Le rendement est lui aussi augmenté, bien qu'il ne s'agisse pas, en soi, d'un paramètre important dans le cas du traitement d'air atmosphérique, qui est gratuit.
- Le cycle n° 3 est également un cycle suivant l'invention, qui diffère toutefois du précédent par le fait que la durée T_{D} est la même (7 s) que dans le cycle classique n° 1. On constate que, par rapport à ce dernier, l'énergie spécifique est augmentée, mais que la productivité intrinsèque reste inchangée; par conséquent, puisque le cycle est plus court, la productivité est accrue. Un tel *cycle* peut donc être intéressant dans des régions où l'énergie est bon marché.

Dans le cycle n° 4, à titre de contre-exemple, contrairement aux enseignements de l'invention, c'est la durée T_{D} qui est réduite. On constate une dégradation de tous les paramètres (productivité, rendement, énergie spécifique, productivité intrinsèque). En particulier, la chute de la productivité intrinsèque est supérieure au gain que l'on pourrait attendre de la réduction de la durée du cycle, de sorte que la productivité est réduite.

L'invention s'applique également à des cycles qui diffèrent de celui de la Figure 2 par le fait que, au cours de l'étape (5), on réalise simultanément une introduction à co-courant, dans l'adsorbeur, du mélange gazeux à séparer ou une évacuation à contre-courant pour parachever l'élution, ou encore en introduisant temporairement du gaz de la capacité 6 à contre-courant au cours de l'étape 4 de purge/élution, typiquement à la fin de cette dernière.

A titre d'exemple, pour la mise en oeuvre d'un cycle tel que décrit ci-dessus, avec un adsorbant de type zéolite 5A et une pression PI2 de 1,1 x 10⁵ Pa, avec un stockage d'oxygène moyenne pureté sous une différentielle de pression d'environ 0,3 x 10⁵ Pa, le volume de la capacité 6 est d'environ 3,5m³/m³ de zéolite.

Pour la mise en oeuvre avec deux adsorbeurs en parallèle, l'utilisation commune des deux capacités 5 et 6 permet notamment une utilisation en continu de la pompe à vide et un pseudo-équilibrage en deux temps entre les deux adsorbeurs.

## Revendications

1. Procédé de traitement d'un mélange de gaz par adsorption à variation de pression dans une installation comprenant au moins un adsorbeur (1), dans lequel on effectue, dans le ou dans chaque adsorbeur (1), un cycle comprenant une phase de production et une phase de régénération, cette dernière comportant une phase initiale comportant une étape de décompression à co-courant et une phase finale comportant une étape de recompression avec introduction à contre-courant de gaz issu de l'étape (3) de décompression à co-courant **caractérisé en ce que** la durée (T_{R}) de ladite étape (5) de recompression à contre-courant est inférieure à 0,8 fois celle (T_{D}) de l'étape de décompression à co-courant.

2. Procédé selon la revendication 2, **caractérisé en ce que** que la durée (T_{R}) de l'étape de recompression à contre-courant est inférieure à 0,5 fois celle (T_{D}) de l'étape de décompression à co-courant.

3. Procédé suivant l'une quelconque des revendications 1 et 2, **caractérisé en ce que** le gaz issu de l'étape (3) de décompression à co-courant est stocké temporairement dans une capacité-tampon (6).

4. Procédé selon l'une des revendications 1 à 3, **caractérisé en ce que** lors de ladite étape de recompression on introduit simultanément à co-courant le mélange gazeux.

5. Procédé suivant l'une des revendications 1 à 4, mis en oeuvre dans une installation utilisant un adsorbeur unique (1).

6. Procédé selon l'une des revendications 1 à 5, **caractérisé en ce que** la phase de régénération comprend une phase intermédiaire (4) de purge/élution.

7. Procédé selon la revendication 6, **caractérisé en ce que** le gaz de purge/élution est du gaz de production.

8. Procédé selon la revendication 7, **caractérisé en ce que** le gaz de purge/élution est stocké temporairement dans une capacité de production (5).

9. Procédé suivant l'une des revendications précédentes, pour la séparation d'oxygène à partir de l'air.

## Patentansprüche

1. Druckwechseladsorptionsverfahren zur Behandlung eines Gasgemisches in einer Anlage, die wenigstens einen Adsorber (1) umfasst, wobei man in dem oder in jedem Adsorber (1) einen Zyklus durchführt, der eine Produktionsphase und eine Regenerierungsphase umfasst, wobei die Letztere aus einer Anfangsphase, die einen Dekompressionsschritt im Gleichstrom umfasst, und einer Endphase besteht, die einen Wiederverdichtungsschritt im Gegenstrom mit Einleitung des Gases umfasst, das aus dem Dekompressionsschritt (3) im Gleichstrom stammt, **dadurch gekennzeichnet, dass** die Zeitdauer (T_{R}) dieses Wiederverdichtungsschrittes (5) im Gegenstrom um das 0,8fache kürzer ist als diejenige (T_{D}) des Dekompressionsschrittes im Gleichstrom.

2. Verfahren nach Anspruch 1, **dadurch gekennzeichnet, dass** die Zeitdauer (T_{R}) des Wiederverdichtungsschrittes im Gegenstrom um das 0,5fache kürzer ist als diejenige (T_{D}) des Dekompressionsschrittes im Gleichstrom.

3. Verfahren nach einem der Ansprüche 1 und 2, **dadurch gekennzeichnet, dass** das Gas, das aus dem Dekompressionsschritt (3) im Gleichstrom stammt, vorübergehend in einem Kapazitätspuffer (6) gespeichert wird.

4. Verfahren nach einem der Ansprüche 1 bis 3, **dadurch gekennzeichnet, dass** man während dieses Wiederverdichtungsschrittes gleichzeitig und im Gleichstrom das Gasgemisch einleitet.

5. Verfahren nach einem der Ansprüche 1 bis 4, das in einer Anlage durchgeführt wird, die einen einzigen Adsorber (1) verwendet.

6. Verfahren nach einem der Ansprüche 1 bis 5, **dadurch gekennzeichnet, dass** die Regenerierungsphase eine Zwischenphase (4) zum Ausblasen / Herausspülen umfasst.

7. Verfahren nach Anspruch 6, **dadurch gekennzeichnet, dass** das Gas zum Ausblasen / Herausspülen Produktionsgas ist.

8. Verfahren nach Anspruch 7, **dadurch gekennzeichnet, dass** das Gas zum Ausblasen / Herausspülen vorübergehend in einem Produktionsbereich (5) gespeichert wird.

9. Verfahren nach einem der vorherigen Ansprüche für die Trennung von Sauerstoff aus der Luft.

## Claims

1. Process for treating a gas mixture by pressure swing adsorption in a plant comprising at least one adsorber (1), in which process a cycle comprising a production phase and a regeneration phase is carried out in the or each adsorber (1), the regeneration phase comprising an initial phase comprising a cocurrent decompression step and a final phase comprising a recompression step with countercurrent introduction of gas coming from the cocurrent decompression step (3), **characterized in that** the duration (T_{R}) of the said countercurrent recompression step (5) is less than 0.8 times that (T_{D}) of the cocurrent decompression step.

2. Process according to Claim 2, **characterized in that** the duration (T_{R}) of the countercurrent recompression step is less than 0.5 times that (T_{D}) of the cocurrent decompression step.

3. Process according to either of Claims 1 and 2, **characterized in that** the gas coming from the cocurrent decompression step (3) is temporarily stored in a buffer tank (6).

4. Process according to one of Claims 1 to 3, **characterized in that**, during the said recompression step, the gas mixture is cocurrently introduced at the same time.

5. Process according to one of Claims 1 to 4, implemented in a plant using a single adsorber (1).

6. Process according to one of Claims 1 to 5, **characterized in that** the regeneration phase includes a purge/elution intermediate phase (4).

7. Process according to Claim 6, **characterized in that** the purge/elution gas is production gas.

8. Process according to Claim 7, **characterized in that** the purge/elution gas is temporarily stored in a production tank (5).

9. Process according to one of the preceding claims for separating oxygen from air.
